# EUROPÄISCHE PATENTSCHRIFT

(11) **EP 3 109 140 B1**
(45) Veröffentlichungstag und Bekanntmachung des Hinweises auf die Patenterteilung: **17.04.2019**
(21) Anmeldenummer: 16172617.9
(22) Anmeldetag: 02.06.2016
(51) Int. Cl.: B62J 11/00, E05B 67/38

(54) **HALTERUNG FÜR EIN ZWEIRAD-ZUBEHÖR**
SUPPORT FOR A BICYCLE ACCESSORY
SUPPORT POUR UN ACCESSOIRE POUR DEUX ROUES

(30) Priorität: 22.06.2015 DE 102015109995
(43) Veröffentlichungstag der Anmeldung: 28.12.2016
(73) Patentinhaber: ABUS August Bremicker Söhne KG, 58300 Wetter-Volmarstein (DE)
(72) Erfinder: MARAFFIO, Enrico, 5507 Mellingen (CH)
(74) Vertreter: Manitz Finsterwald Patent- und Rechtsanwaltspartnerschaft mbB

(56) Entgegenhaltungen:
- EP-A2- 1 182 123
- WO-A1-2013/012786
- CN-A- 103 523 124
- DE-A1-102007 037 439
- DE-A1-102008 026 739
- DE-U1- 9 310 011
- DE-U1- 20 111 004
- DE-U1-202004 018 834
- US-A1- 2009 032 561
- US-A1- 2010 139 344

## Beschreibung

Die vorliegende Erfindung betrifft eine Halterung für ein Zweirad-Zubehör, insbesondere für ein Zweirad-Schloss. Derartige Halterungen sind bekannt, um Zweirad-Zubehör an einem jeweiligen Zweirad zu befestigen und somit auf einer Fahrt einfach mitführen zu können. Dazu wird die Halterung etwa an einem Rahmen, insbesondere einem Rohrabschnitt des Rahmens, des Zweirades befestigt. Um dabei die Position der Halterung möglichst individuell festlegen zu können, und da der Durchmesser und die Form eines jeweiligen Rahmenrohres für verschiedene Abschnitte des Rahmens oder für verschiedene Zweiräder sehr unterschiedlich sein können, ist es wünschenswert, dass die Halterung an verschiedene Dimensionen flexibel anpassbar ist.

Eine mögliche Art der Befestigung einer solchen Halterung besteht darin, die Halterung mittels einer Rohrschelle um einen jeweiligen Rohrabschnitt zu schnallen. Für eine derartige Befestigung ist es zum Anziehen der Schelle jedoch erforderlich, Werkzeug wie etwa einen Schraubendreher zu verwenden. Anstelle einer Schelle können auch Riemen, beispielsweise Textilbänder, verwendet werden, um ein jeweiliges Rahmenrohr zu umschlingen. Für eine stabile Befestigung muss der Riemen jedoch nach dem Umschlingen des Rohres fest mit der Halterung verbunden werden, wozu in der Regel wiederum der Einsatz von Werkzeug, beispielsweise eines Innensechskantschlüssels, erforderlich ist.

Der Werkzeugeinsatz wird unter anderem dadurch bedingt, dass die Befestigung der Halterung besonders fest und zuverlässig erfolgen muss, damit ein versehentliches Lösen der Halterung sicher verhindert wird. Denn andernfalls könnte ein Lösen der Halterung, insbesondere während einer Fahrt, zu einer Beschädigung des Zweirad-Zubehörs oder des Zweirades oder auch zu einer Gefährdung des Fahrers führen.

Aus EP 1 182 123 A2 ist eine Halterung für die Befestigung von Funktionselementen an stangenförmigen Elementen bekannt, wobei zur Befestigung der Halterung ein Band um das stangenförmige Element geführt und durch einen Durchgangsschlitz eines Rotationselements der Halterung geführt wird, so dass das Band durch Drehen des Rotationselements gespannt wird. In DE 201 11 004 U1 wird eine Vorrichtung zum Befestigen eines Fahrradschlosses an einer Sitzstange beschrieben, wobei ein Teil der Vorrichtung mittels eines kabelbinderartigen Gurtes an dem Fahrradschloss befestigt wird. Ferner offenbart DE 10 2007 037 439 A1 einen Halter für die Befestigung von Zubehörteilen an der Strebe eines Zweirades, wobei der Halter mittels eines um die Strebe geführten Bandes befestigt wird, das mittels eines schwenkbaren Klemmhebels festgelegt wird. Aus DE 10 2008 026 739 A1, auf der der Oberbegriff der beanspruchten Halterung basiert, ist ein Befestigungsmittel zur Befestigung von Zubehör an einem strangförmigen Trageelement bekannt, wobei zur Befestigung ein mittels einer Schraube verschiebbarer Spannschlitten vorgesehen ist, durch den ein um das Trageelement geführtes Band geführt ist.

Es ist eine Aufgabe der Erfindung, eine Halterung für Zweirad-Zubehör bereitzustellen, die in einfacher Weise werkzeuglos an einem Zweirad befestigt werden kann und eine stabile sowie zuverlässige Anordnung der Halterung gewährleistet.

Die Aufgabe wird gelöst durch eine Halterung mit den Merkmalen des Anspruchs 1. Diese Halterung umfasst ein Befestigungsband mit einem ersten und einem zweiten, losen Ende zum Umschlingen eines Rohrabschnitts eines Zweirads sowie einen Grundkörper, der einen Stützabschnitt zum Anliegen an dem Rohrabschnitt des Zweirads, eine Halteeinrichtung für das Zweirad-Zubehör oder für ein zubehör-spezifisches Adapterstück und eine Durchführung für zumindest das zweite, lose Ende des Befestigungsbandes aufweist. Die Aufgabe wird insbesondere dadurch gelöst, dass die Halterung ferner ein Sicherungselement umfasst und dass der Grundkörper eine quer zu der genannten Durchführung ausgerichtete Aufnahmeöffnung für das Sicherungselement aufweist, wobei das Befestigungsband, wenn es durch die Durchführung durchgeführt ist, entlang der Durchführung versetzbar ist, und wobei das Sicherungselement in eine Sicherungsstellung beweglich ist, in der sich das Sicherungselement zumindest teilweise in der Aufnahmeöffnung befindet und das Befestigungsband in der Durchführung durch Umlenkung spannt und/oder gegen ein Versetzen sperrt.

Bei der erfindungsgemäßen Halterung ist also als Bestandteil der Halterung ein bewegliches Sicherungselement vorgesehen, das beim Befestigen der Halterung an einem Zweirad vom Benutzer in einfacher Weise betätigt, nämlich aus einer grundsätzlich das Hindurchführen (zumindest eines Teils) des Befestigungsbandes freigebenden Stellung in die Sicherungsstellung versetzt werden kann, um eine zuverlässige Befestigung der Halterung an dem Zweirad zu bewirken oder zumindest zu unterstützen. Die freigebende Stellung, nachfolgend auch als Freigabestellung bezeichnet, kann z.B. dadurch vorliegen, dass das Sicherungselement von der übrigen Halterung, insbesondere vom Grundkörper, gelöst ist, oder z.B. dadurch, dass das Sicherungselement weniger tief in die Aufnahmeöffnung aufgenommen ist als in der Sicherungsstellung. Dabei besteht die Betätigung des Sicherungselements in einem einfachen linearen Versetzen, das etwa durch Druck mittels eines Fingers erreicht werden kann. Somit kann die Befestigung der Halterung an dem Zweirad, zumindest jedoch das finale Sichern der Halterung an dem Zweirad, werkzeuglos erfolgen. Zudem wird durch das Sperren und/oder Spannen des Befestigungsbandes in der Durchführung des Grundkörpers der Halterung eine besonders zuverlässige Befestigung der Halterung an dem Zweirad erreicht.

Das Spannen des Befestigungsbandes durch Umlenkung kann hierbei insbesondere dadurch erreicht werden, dass das Sicherungselement durch sein Versetzen in die Sicherungsstellung einen Abschnitt des Befestigungsbands innerhalb der Durchführung des Grundkörpers von dem Stützabschnitt des Grundkörpers weg bewegt. Das genannte Umlenken des Befestigungsbands kann insbesondere ein Verformen relativ zu einem zumindest im Wesentlichen geradlinigen Verlauf umfassen (z.B. durch Bildung einer Ausbuchtung mit einer stärkeren Krümmung und/oder Auslenkung). Das Sperren des Befestigungsbandes kann insbesondere dadurch erreicht werden, dass - alternativ oder zusätzlich zu dem Spannen - das Sicherungselement durch sein Versetzen in die Sicherungsstellung in einen formschlüssigen Eingriff mit dem Befestigungsband gerät.

Das Befestigungsband kann als Material beispielsweise Kunststoff, insbesondere ein Elastomer, und/oder auch Textil oder ein sonstiges Gewebe umfassen. Grundsätzlich sind aber Materialien aller Art denkbar, die zur Ausbildung eines flexiblen Befestigungsbandes geeignet sind. Das Befestigungsband ist dabei vorzugsweise im Wesentlichen flach und länglich ausgebildet und weist somit zwei längliche Flachseiten sowie zwei Schmalseiten (die auch Schmalkanten sein können) auf, welche die Flachseiten quer zur Längserstreckung miteinander verbinden.

Die beiden Enden der Längserstreckung des Befestigungsbandes bilden ein erstes und ein zweites Ende, wobei das zweite Ende zumindest insofern lose ist, als es nicht von vorn herein mit dem Grundkörper verbunden ist, sondern vorteilhafterweise erst zur Befestigung der Halterung an dem Zweirad, insbesondere nach Umschlingen eines Rohrabschnitts des Zweirads, durch die Durchführung des Grundkörpers durchgeführt und an dem ersten Ende des Befestigungsbandes und/oder an dem Grundkörper befestigt wird.

Das erste Ende des Befestigungsbandes kann dagegen bereits zuvor und insbesondere dauerhaft mit dem Grundkörper verbunden sein. Grundsätzlich ist es aber auch denkbar, dass das erste Ende von dem Grundkörper gelöst oder zumindest lösbar ausgebildet ist. Vorzugsweise wird dann das erste Ende beim Befestigen der Halterung an dem Zweirad zunächst mit dem Grundkörper verbunden, so dass die endgültige Befestigung wiederum dadurch erfolgt, dass das zweite, lose Ende um den Rohrabschnitt des Zweirads geschlungen und an dem ersten Ende festgelegt wird.

Als das zweite, lose Ende des Befestigungsbandes ist dabei nicht lediglich eine Spitze oder Stirnkante des Befestigungsbandes anzusehen. Vielmehr kann das zweite, lose Ende des Befestigungsbandes im Wesentlichen den Großteil des Befestigungsbandes umfassen, insbesondere zumindest denjenigen Teil des Befestigungsbandes, der nach Umschlingen eines jeweiligen Rohrabschnitts durch die genannte Durchführung des Grundkörpers der Halterung durchgeführt werden kann. Als das zweite, lose Ende kann aber auch zusätzlich der Teil des Befestigungsbandes angesehen werden, der ausgehende vom ersten Ende den rohrabschnitt umschlingt bzw. an dem Rohrabschnitt anliegt. Zudem können das erste Ende und das zweite, lose Ende des Befestigungsbandes auch unmittelbar aneinander angrenzen und zusammen das gesamte Befestigungsband ausbilden.

Durch die Durchführung in dem Grundkörper der Halterung wird eine Richtung in dem Grundkörper definiert, in die das zweite, lose Ende des Befestigungsbandes durch den Grundkörper hindurchgeführt werden kann. Generell erstreckt sich die Durchführung durchgehend durch den oder an dem Grundkörper (d.h. innerhalb des Grundkörpers oder an einer Oberfläche des Grundkörpers), insbesondere geradlinig oder gekrümmt. In ähnlicher Weise definiert die Aufnahmeöffnung für das Sicherungselement die Richtung bzw. den Verlauf der Beweglichkeit des Sicherungselements. Dabei ist die Aufnahmeöffnung quer zur Durchführung ausgerichtet. Die Aufnahmeöffnung und die Durchführung verlaufen also nicht parallel zueinander, sondern sind derart relativ zueinander ausgerichtet, dass das Sicherungselement vorteilhafterweise zumindest in Abhängigkeit von seiner jeweiligen Stellung mit dem durch die Durchführung durchgeführten Befestigungsband zusammenwirken kann. Insbesondere kann die Aufnahmeöffnung die Durchführung schneiden, wobei die Aufnahmeöffnung sich durchgehend erstreckt oder an einem Ende geschlossen ist. Dabei ist es insbesondere vorteilhaft, wenn die Aufnahmeöffnung und die Durchführung senkrecht zueinander angeordnet sind. Es sind aber auch andere Ausrichtungen möglich, in denen das Sicherungselement und das Befestigungsband zumindest in der Sicherungsstellung des Sicherungselements zusammenwirken können.

Vorzugsweise ist die Aufnahmeöffnung durchgehend und zudem derart ausgebildet, dass das Sicherungselement von beiden Seiten der Aufnahmeöffnung in diese aufgenommen werden kann. Dadurch ist die Betätigung des Sicherungselements nicht auf eine Seite der Halterung festgelegt.

Gemäß einer vorteilhaften Ausführungsform sind die Durchführung und die Aufnahmeöffnung zumindest derart gleichartig zueinander ausgebildet, dass sie funktional gegeneinander austauschbar sind. Mit anderen Worten kann das Befestigungsband bei einer solchen Ausführungsform wahlweise durch die Durchführung oder durch die Aufnahmeöffnung geführt werden und kann das Sicherungselement wahlweise in der Aufnahmeöffnung bzw. in der Durchführung aufgenommen werden, so dass beispielsweise das Befestigungsband durch die Aufnahmeöffnung geführt sein kann und das Sicherungselement in der Durchführung in eine Sicherungsstellung versetzt ist, in der es das Befestigungsband in der Aufnahmeöffnung durch Umlenkung spannt und/oder gegen ein Versetzen sperrt. Durch eine solche einander entsprechende Ausbildung der Aufnahmeöffnung und der Durchführung weist die Halterung eine besonders große Flexibilität in der Anwendung auf, da mehr Möglichkeiten bestehen, das Befestigungsband und das Sicherungselement an dem Grundkörper anzuordnen.

Vorzugsweise ist das erste Ende des Befestigungsbandes an dem Grundkörper befestigt, also insbesondere ortsfest, das heißt in fester Relativlage zu dem Grundkörper, angeordnet. Wie bereits dargelegt kann die Befestigung dauerhaft oder auch lösbar sein, wobei eine lösbare Befestigung insbesondere rastend erfolgen kann.

Alternativ zu einer Befestigung des ersten Endes des Befestigungsbandes an dem Grundkörper kann das erste Ende ähnlich zu dem zweiten Ende des Befestigungsbandes durch die Durchführung geführt werden und dann darin, etwa auch mittels des Sicherungselements oder eines anderen Sicherungselements, fixiert werden, wobei das erste und das zweite Ende des Befestigungsbandes dann vorzugsweise gegenläufig zueinander durch die Durchführung geführt sind. Auch auf diese Weise lässt sich durch das Befestigungsband eine Schlaufe zum Befestigen der Halterung an dem Rohrabschnitt des Zweirads ausbilden.

Gemäß einer Weiterbildung ist das erste Ende des Befestigungsbandes schwenkbar an dem Grundkörper befestigt. Dies hat den Vorteil, dass der Verlauf des Befestigungsbandes, wenn dieses den Rohrabschnitt des Zweirades umschlingt, besonders gut an die Form und die Größe des Rohrabschnitts anpassbar ist. Daraus ergibt sich neben einer erhöhten Flexibilität auch ein zuverlässigerer Halt der Anordnung der Halterung an dem Zweirad.

Alternativ oder zusätzlich kann das erste Ende des Befestigungsbandes ferner an dem Grundkörper eingehängt sein. Auch diese Art der Befestigung kann dabei entweder dauerhaft oder lösbar sein. Insbesondere wenn die Befestigung lösbar ist, stellt das Einhängen des ersten Endes an dem Grundkörper eine besonders einfache Art der Befestigung dar, die zudem die Schwenkbarkeit des ersten Endes bewirken kann. Außerdem kann dadurch ein Austausch des Befestigungsbandes auf einfache Weise möglich sein, um beispielsweise Befestigungsbänder unterschiedlicher Länge bedarfsweise zu verwenden.

Gemäß einer bevorzugten Weiterbildung weist das erste Ende des Befestigungsbandes zwei seitliche Zapfenabschnitte auf, mittels derer das Befestigungsband in einer zugeordneten Aufnahmevertiefung an dem Grundkörper eingehängt ist. Die beiden Zapfenabschnitte sind dabei insbesondere koaxial ausgebildet und können beispielsweise die Enden eines im Wesentlichen zylinderförmigen und senkrecht zur Längserstreckung des Befestigungsbandes ausgerichteten Stiftabschnitts bilden, der integral in dem Befestigungsband oder als separates und vorzugsweise fest mit dem Befestigungsband verbundenes Element ausgebildet sein kann. Die Zylinderachse eines solchen Stiftabschnitts bzw. der genannten Zapfenabschnitte kann dann eine Schwenkachse des ersten Endes des Befestigungsbandes bilden.

Alternativ zu dieser Ausführungsform kann das Befestigungsband an seinem ersten Ende einen Hakenabschnitt besitzen, der in eine zugeordnete Aufnahmevertiefung an dem Grundkörper eingreift oder eine zugeordnete Aufnahmeerhebung an dem Grundkörper umgreift. Es kann aber auch umgekehrt das Befestigungsband an seinem ersten Ende eine Öse besitzen, in die ein Hakenabschnitt des Grundkörpers eingreift.

Die genannte Aufnahmevertiefung zum Einhängen des Befestigungsbands kann insbesondere an einem Ende der Durchführung für das Befestigungsband vorgesehen oder durch die Durchführung gebildet sein.

Unabhängig von der Art der Befestigung des ersten Endes des Befestigungsbandes an dem Grundkörper kann vorgesehen sein, dass das Befestigungsband zumindest geringfügig elastisch ist, um durch einen Spannen des Befestigungsbandes bei und/oder nach dem Umschlingen des Rohrabschnitts des Zweirads eine dauerhafte Zugkraft zwischen dem ersten Ende und dem zweiten Ende zu erzeugen. Insbesondere wirkt die sich entlang dem Befestigungsband wirkende Zugkraft derart aus, dass die Halterung besonders stabil und zuverlässig positionsfest an dem Rohrabschnitt des Zweirades gehalten wird. Hierzu ist die Elastizität des Befestigungsbandes vorzugsweise derart bemessen, dass sie einerseits ein Spannen des Befestigungsbandes in einem insbesondere durch das genannte Sicherungselement bewirkten Maße zulässt, andererseits aber muss die Elastizität derart begrenzt sein, dass die für eine stabile Anordnung der Halterung an dem Rohrabschnitt erforderlichen Zugkräfte erreicht werden und das Befestigungsband nicht etwa z.B. aufgrund des Gewichts eines an der Halterung angeordneten Zubehörs nachgeben und sich vom Rohrabschnitt lösen kann. Ein weiterer Vorteil der Elastizität kann darin bestehen, dass zur Befestigung der Halterung an dem Rohrabschnitt das zweite, lose Ende des Befestigungsbandes durch die Durchführung hindurchgeführt und anschließend durch Ziehen, z.B. von Hand, gedehnt wird, damit durch das Sicherungselement das zweite, lose Ende des Befestigungsbandes in der Durchführung in einer Position gegen ein Versetzen sperren kann, in der das Befestigungsband gespannt ist und daher mit einer erhöhten Zugkraft an dem Rohrabschnitt anliegt.

Alternativ zu einer elastischen Ausbildung des Befestigungsbandes ist es möglich, dass das Befestigungsband im Wesentlichen längeninvariabel ist, also keine oder eine lediglich unwesentliche Elastizität aufweist. In diesem Fall kann das den Rohrabschnitt des Zweirades umschlingende Befestigungsband zwar nicht gedehnt, aber insbesondere durch das Sicherungselement gleichwohl insofern gespannt werden, als das Sicherungselement nach Art eines Keils in die von dem Befestigungsband gebildete Schlaufe gedrängt wird und somit gegebenenfalls vorhandenes Spiel zwischen dem Befestigungsband und dem Rohrabschnitt kompensiert und das Befestigungsband mit erhöhter Spann- oder Anliegekraft an dem Rohrabschnitt anliegen lässt. Auch auf diese Weise kann eine besonders stabile und zuverlässige Befestigung der Halterung an dem Rohrabschnitt erreicht werden.

Gemäß einer bevorzugten Ausführungsform der Erfindung ist an dem Befestigungsband außerhalb des Grundkörpers eine Verschlusseinrichtung zum Festlegen der Länge einer durch das Befestigungsband gebildeten Schlaufe ausgebildet. Diese Verschlusseinrichtung befindet sich entweder stets oder zumindest dann außerhalb des Grundkörpers, wenn durch das Hindurchführen des zweiten, losen Endes durch die Durchführung das Befestigungsband eine Schlaufe um einen jeweiligen Rohrabschnitt zur Befestigung der Halterung an diesem Rohrabschnitt bildet. Die Verschlusseinrichtung ist daher von dem in dem Grundkörper erfolgenden Zusammenwirken des Sicherungselements mit dem Befestigungsband zu dessen Sperren und/oder Spannen zu unterscheiden.

Bei einer solchen Ausführungsform mit Verschlusseinrichtung kann somit zur Befestigung der Halterung an dem Rohrabschnitt eines Zweirads insbesondere vorgesehen sein, dass zunächst mittels des Befestigungsbandes eine Schlaufe um den Rohrabschnitt gebildet wird, deren Länge vorzugsweise durch straffes, enges Anlegen an dem Rohrabschnitt zunächst grob minimiert wird und dann mittels der Verschlusseinrichtung festgelegt wird. Im Anschluss daran kann dann zusätzlich mittels des Sicherungselements im Bereich der Durchführung, durch die das zweite, lose Ende des Befestigungsbandes geführt ist, das Befestigungsband gegen ein Versetzen gesperrt oder aber für ein noch engeres und insbesondere mit Spann- und/oder Zugkraft wirkendes Anliegen des Befestigungsbandes an dem Rohrabschnitt gespannt werden.

Dabei kann die Verschlusseinrichtung, insbesondere unmittelbar, zwischen dem ersten Ende und dem zweiten, losen Ende des Befestigungsbandes zusammenwirken, um eine Überlappung der beiden Enden festzulegen. Hierzu kann die Verschlusseinrichtung in verschiedener Weise ausgebildet sein. Beispielsweise kann die Verschlusseinrichtung einen formschlüssigen mechanischen Verschluss, einen magnetischen Verschluss oder einen Klettverschluss umfassen oder nach Art bekannter Verschlüsse etwa für Armbänder von Armbanduhren ausgebildet sein. Dabei kann das Festlegen einer jeweiligen Länge der durch das Befestigungsband gebildeten Schlaufe stufenlos oder gestuft, vorzugsweise mit einer Schrittweite von wenigen Millimetern, insbesondere weniger als 3 mm, möglich sein. Insbesondere ist die Verschlusseinrichtung derart ausgebildet, dass das Festlegen der Länge der genannten Schlaufe auf einfache Weise werkzeuglos erfolgen kann.

Gemäß einer bevorzugten Ausführungsform sind zur Bildung einer derartigen Verschlusseinrichtung an dem ersten Ende des Befestigungsbandes und an dem zweiten Ende des Befestigungsbandes jeweilige Fixiermittel vorgesehen, um eine Überlappung des den Rohrabschnitt des Zweirads umschlingenden und durch die Durchführung geführten zweiten Endes des Befestigungsbandes mit dem ersten Ende des Befestigungsbandes festzulegen. Die Fixiermittel können dabei vorteilhafterweise rastend ausgebildet und bezüglich ihrer Rastwirkung derart ausgerichtet sein, dass sie ein Verringern der Länge der durch das Befestigungsband gebildeten Schlaufe zulassen, ein Verlängern der Länge der Schlaufe hingegen durch die Fixiermittel verhindert wird. Mittels derartiger Fixiermittel kann somit ein festes Anziehen des den Rohrabschnitt des Zweirades umschlingenden Befestigungsbandes unterstützt werden. Wie vorstehend erläutert, sind in diesem Zusammenhang das erste Ende und das zweite Ende des Befestigungsbandes nicht notwendigerweise lediglich als eine Spitze oder Stirnkante des Befestigungsbandes zu verstehen. Vielmehr können das erste Ende und das zweite Ende des Befestigungsbandes jeweils einen weiten Längenabschnitt des Befestigungsbandes und/oder einen von einer Spitze oder Stirnkante des Befestigungsbandes entfernten Längenabschnitt umfassen, wobei es lediglich wichtig ist, dass das genannte erste Ende und das genannte zweite Ende des Befestigungsbandes einander bezüglich des vorgesehenen Umschlingens des Rohrabschnitts des Zweirads entgegengesetzt sind.

Unter der genannten Überlappung, die durch die genannte Verschlusseinrichtung bzw. die genannten Fixiermittel festgelegt wird, ist zum einen zu verstehen, dass das eine Ende überhaupt an dem anderen Ende zumindest bereichsweise überlappend anliegt. Zum anderen umfasst der Begriff "Überlappung" das Maß der Überlappung, das dadurch definiert wird, wo bzw. mit welchem Abschnitt das eine Ende an dem anderen Ende des Befestigungsbandes anliegt.

Gemäß einer vorteilhaften Weiterbildung weist das erste Ende des Befestigungsbandes mehrere Haltenasen auf, um das zweite Ende des Befestigungsbandes im Bereich der Haltenasen an dem ersten Ende des Befestigungsbandes anliegend zu halten, oder umgekehrt, das heißt die Haltenasen können auch dem zweiten Ende des Befestigungsbandes zugeordnet sein, um das erste Ende des Befestigungsbandes im Bereich der Haltenasen an dem zweiten Ende des Befestigungsbandes anliegend zu halten. Die genannten Haltenasen dienen also insbesondere dazu, zu gewährleisten, dass das erste und das zweite Ende des Befestigungsbandes überhaupt überlappen, also aneinander anliegend gehalten werden. Insbesondere können die an dem einen Ende des Befestigungsbandes ausgebildeten Haltenasen paarweise dazu ausgebildet sein, jeweils entgegengesetzte Schmalseiten des anderen Endes des Befestigungsbandes zu umgreifen.

Dabei können die Haltenasen so ausgebildet sein, dass sie ein Lösen des einen Endes von dem anderen Ende des Befestigungsbandes in eine Richtung senkrecht zu aneinander anliegenden jeweiligen Flachseiten der überlappenden Enden des Befestigungsbandes verhindern, aber ein Gleiten der beiden Enden des Befestigungsbandes insbesondere in Richtung ihrer jeweilige Längserstreckung relativ zueinander zulassen. Ferner können die Haltenasen eine Rastfunktion aufweisen, so dass ein Anlegen des einen Endes des Befestigungsbandes an das andere Ende des Befestigungsbandes, insbesondere mit jeweiligen Flachseiten der Enden, senkrecht zur Längserstreckung des Befestigungsbandes möglich ist, ein entgegengesetztes Lösen jedoch nicht. Des Weiteren ist es möglich, dass die Haltenasen, wenn sie das eine Ende des Befestigungsbandes an dem anderen Ende des Befestigungsbandes anliegend halten, ein Gleiten der beiden Enden relativ zueinander entlang der Längserstreckung des Befestigungsbandes zulassen.

Gemäß einer weiteren bevorzugten Ausführungsform weist das erste Ende des Befestigungsbandes zumindest einen Fixierzahn auf und weist das zweite Ende des Befestigungsbandes eine Vielzahl von Fixierkerben auf, um durch das Eingreifen des zumindest einen Fixierzahns in eine jeweilige Fixierkerbe das Maß der Überlappung festzulegen. Auch eine umgekehrte Anordnung ist möglich, d.h. die dem zweiten Ende des Befestigungsbandes zugeordneten Fixiermittel können zumindest einen Fixierzahn aufweisen, während die dem ersten Ende des Befestigungsbandes zugeordneten Fixiermittel eine Vielzahl von Fixierkerben aufweisen. Der zumindest eine Fixierzahn und die Fixierkerben können alternativ oder zusätzlich zu den genannten Haltenasen als Teil der genannten Verschlusseinrichtung vorgesehen sein. Insbesondere wird durch das Zusammenwirken des zumindest einen Fixierzahns mit den Fixierkerben die genaue relative Lage des ersten und des zweiten, losen Endes des Befestigungsbandes zueinander (insbesondere in Bezug auf die Längserstreckung des Befestigungsbandes) festgelegt. Dabei kann das Zusammenwirken von Fixierzahn und Fixierkerben grundsätzlich auch dazu beitragen, das eine Ende des Befestigungsbandes an dem anderen Ende des Befestigungsbandes überhaupt anliegend zu halten. Dies muss jedoch, insbesondere wenn hierfür zusätzliche Elemente wie die beschriebenen Haltenasen vorgesehen sind, nicht zwangsläufig der Fall sein.

Vorzugsweise ist der zumindest eine Fixierzahn an einer Flachseite des Befestigungsbandes vorgesehen und ist die Vielzahl von Fixierkerben an einer entgegengesetzten Flachseite des Befestigungsbandes vorgesehen. Auf diese Weise kommen der zumindest eine Fixierzahn und die Fixierkerben gerade dadurch für ein Zusammenwirken miteinander in Kontakt, wenn das Befestigungsband zu einer Schlaufe geschlungen wird und somit die entgegengesetzten Flachseiten des Befestigungsbandes zumindest bereichsweise überlappend aneinander anliegen. Der zumindest eine Fixierzahn und die Fixierkerben können nach Art eines Rastzahns bzw. von Rastkerben ausgebildet sein, so dass sie vorteilhafterweise derart zusammenwirken, dass ein Verringern der Länge der genannten Schlaufe durch das Zusammenwirken des Rastzahns und der Rastkerben ermöglicht wird, ein Vergrößern der Länge der Schlaufe jedoch nicht ohne weiteres möglich ist.

Gemäß einer bevorzugten Ausführungsform ist das Sicherungselement dazu angepasst, durch eine Bewegung in die Sicherungsstellung das in der Durchführung befindliche Befestigungsband dergestalt umzulenken, dass das Befestigungsband von dem Stützabschnitt des Grundkörpers wegbewegt wird, um hierdurch das Befestigungsband zu spannen. Somit bewirkt das Versetzen des Sicherungselements in die Sicherungsstellung ein Wegbewegen des Befestigungsbandes von dem Stützabschnitt des Grundkörpers. Dies kann etwa dadurch erfolgen, dass das Sicherungselement nach Art eines Keils zwischen dem Stützabschnitt oder einen damit stationär verbundenen Abschnitt des Grundkörpers und das in der Durchführung befindliche Befestigungsband getrieben wird. Aufgrund des Sicherungselements muss die von dem Befestigungsband gebildete Schlaufe innerhalb der Durchführung also sozusagen einen Umweg vollziehen, durch den die Schlaufe für eine besonders stabile und zuverlässige Befestigung der Halterung an dem Rohrabschnitt gespannt wird.

Gemäß einer Ausführungsform bewirkt das Sicherungselement nicht nur ein Wegbewegen des Befestigungsbands von dem Stützabschnitt des Grundkörpers, sondern zugleich auch ein Sperren des Befestigungsbands gegen ein Versetzen entlang der Durchführung (und somit auch ein Sperren des Befestigungsbands gegen ein Versetzen der beiden Enden des Bandes relativ zueinander). Insbesondere kann dadurch die genannte Festlegung der Überlappung der beiden Enden des Befestigungsbandes mittels einer Verschlusseinrichtung noch unterstützt werden.

Gemäß einer weiteren vorteilhaften Ausführungsform weist die Durchführung einen Umlenkraum auf, der bezüglich der Durchführrichtung des Befestigungsbandes zu beiden Seiten von einer jeweiligen Umlenkkante begrenzt ist, wobei der Bereich des Umlenkraums gegenüber den Bereichen der Umlenkkanten eine Querschnittsvergrößerung der Durchführung aufweist. Insbesondere kreuzt die Aufnahmeöffnung für das Sicherungselement die Durchführung im Bereich des genannten Umlenkraums. Somit kann, zumindest wenn sich das Sicherungselement in einer das Durchführen des Befestigungsbandes durch die Durchführung nicht sperrenden Stellung befindet, das zweite, lose Ende des Befestigungsbandes entlang einer direkten, insbesondere minimalen, Wegstrecke den Umlenkraum von der ersten Umlenkkante bis zur zweiten Umlenkkante passieren. Wenn dagegen das Sicherungselement in die Sicherungsstellung versetzt ist, wird vorteilhafterweise das direkte Passieren des Umlenkraums verhindert und der im Umlenkraum befindliche Abschnitt des Befestigungsbandes innerhalb des Umlenkraums auf eine verlängerte Wegstrecke umgelenkt. Dadurch vollzieht das Befestigungsband in der Durchführung beispielsweise eine Biegung an der einen Umlenkkante, verläuft dann auf einer von dem Sicherungselement vorgegebenen und aufgrund der Querschnittsvergrößerung möglichen umgelenkten Bahn um das Sicherungselement herum zur anderen Umlenkkante, wo es eine weitere Biegung vollzieht, um schließlich weiter durch die Durchführung geführt zu werden.

Durch einen derartigen Verlauf des Befestigungsbandes in der Durchführung wird zum einen die Wegstrecke des Befestigungsbands durch die Durchführung verlängert, so dass das Befestigungsband für ein festes Anliegen der Halterung an dem Rohrabschnitt des Zweirades gespannt wird. Zum anderen wird das Befestigungsband aufgrund des Umlenkens an den beiden Umlenkkanten sowie um das Sicherungselement (in dessen Sicherungsstellung) herum gegen ein Versetzen in der Durchführung gesperrt oder zumindest, insbesondere aufgrund von Reibung, erheblich daran gehindert.

Alternativ oder zusätzlich zu dem beschriebenen Spannen des Befestigungsbandes durch ein Umlenken kann das Sperren des Befestigungsbandes in der Durchführung auch durch ein, insbesondere formschlüssiges, Eingreifen des Sicherungselements in eine entsprechende Struktur des Befestigungsbandes erfolgen. Beispielsweise kann das Befestigungsband an einer Flachseite mehrere Eingriffsvertiefungen aufweisen. Das Sicherungselement kann dann in der Sicherungsstellung in wenigstens eine der Eingriffsvertiefungen eingreifen, um so ein Versetzen des Befestigungsbandes entlang seiner Längsrichtung zu verhindern, während das sich Sicherungselement ansonsten außer Eingriff mit den Eingriffsvertiefungen befindet, damit das Befestigungsband ungehindert entlang seiner Längserstreckung durch die Durchführung bewegt werden kann.

Die Eingriffsvertiefungen können beispielsweise als in die genannte Flachseite des Befestigungsbandes eingelassene Riffelung ausgebildet sein, in die das Sicherungselement, insbesondere ein hierzu geeignet ausgebildeter Stegabschnitt des Sicherungselements, vorzugsweise formschlüssig eingreifen kann. Die Eingriffsvertiefungen können beispielsweise in Längsrichtung einen rechteckigen oder zur Ausbildung einer Rastfunktion einen asymmetrisch dreieckigen Querschnitt aufweisen, wobei das Sicherungselement vorzugsweise entsprechend komplementär ausgebildet ist. Das Sperren des Befestigungsbandes in einer gespannten Position kann dann dadurch erreicht werden, dass das Befestigungsband durch die Durchführung geführt und, etwa von Hand, mittels Zugs gespannt wird, woraufhin die so erreichte (gespannte) Position des Befestigungsbandes in der Durchführung durch Verschieben des Sicherungselements in seine Sicherungsstellung fixiert wird.

Ferner ist es vorteilhaft, wenn das Sicherungselement einen Stegabschnitt aufweist, der in Richtung der Beweglichkeit des Sicherungselements in der Aufnahmeöffnung verläuft und der senkrecht zu dieser Richtung vorsteht, wobei der Stegabschnitt dazu angepasst ist, in der Sicherungsstellung des Sicherungselements das Befestigungsband umzulenken und/oder in das Befestigungsband einzugreifen. Bei einer solchen Ausführungsform kann somit der Stegabschnitt spezielle für die Funktion Zusammenwirkens mit dem Befestigungsband (also etwa des Umlenkens und/oder Eingreifens) geeignet ausgebildet sein, während das übrige Sicherungselement im Hinblick auf eine geeignete Führung in der Aufnahmeöffnung und eine gute Handhabbarkeit insbesondere für eine Betätigung von Hand ausgebildet sein kann.

Gemäß einer vorteilhaften Weiterbildung weist der Stegabschnitt in Richtung zur Sicherungsstellung hin eine bezüglich dieser Richtung schräge Flanke auf, um bei Bewegung des Sicherungselements in die Sicherungsstellung das Befestigungsband zunehmend umzulenken. Die schräge Flanke wirkt somit nach Art eines Keils und erleichtert das Einschieben des Sicherungselements zwischen das Befestigungsband und z.B. eine Innenwand der Durchführung. Durch das zunehmende Umlenken erfolgt auch die Zunahme der Spann- bzw. Zugkraft in dem Befestigungsband und auf den Rohrabschnitt zunehmend und somit in schonender Weise. Grundsätzlich ist es zudem denkbar, dass dadurch, wie weit das Sicherungselement in Richtung der Sicherungsstellung bewegt wird, eine gewünschte Spann- oder Zugkraft bzw. Festigkeit der Anordnung der Halterung an dem Rohrabschnitt einstellbar ist.

Alternativ oder zusätzlich zu dieser Ausbildung kann sich der Stegabschnitt lediglich über einen Teil der Länge des Sicherungselements erstrecken, insbesondere von einem in Richtung von der Sicherungsstellung weg ausgerichteten Ende des Sicherungselements aus über einen Teil der Länge des Sicherungselements in Richtung eines zur Sicherungsstellung hin ausgerichteten Endes des Sicherungselements. Dieser Teil kann insbesondere etwa ein Drittel, etwa die Hälfte oder etwa zwei Drittel der Länge des Sicherungselements oder mehr betragen. Durch einen relativ kurzen Stegabschnitt oder einen relativ kurzen Eingriffsvorsprung des Stegabschnitts, der in der Sicherungsstellung des Sicherungselements in das Befestigungsband eingreift, kann eine Beschädigung des Befestigungsbands (etwa durch Abquetschen) besonders zuverlässig vermieden werden. Durch einen längeren Stegabschnitt hingegen kann die Stabilität des Sicherungselements erhöht werden.

Grundsätzlich kann die genannte, ein Durchführen des Befestigungsbandes durch die Durchführung freigebende Stellung des Sicherungselements darin bestehen, dass das Sicherungselement von dem Grundkörper gelöst wird und bereits daher nicht mit dem Befestigungsband zusammenwirken kann. Es ist jedoch bevorzugt, wenn das Sicherungselement auch dann, wenn es sich nicht in der Sicherungsstellung befindet, weiterhin mit dem Grundkörper unverlierbar verbunden ist (z.B. zumindest teilweise in der Aufnahmeöffnung des Grundkörpers aufgenommen ist) und sich etwa in einer Position befindet, in der es ein von dem Sicherungselement im Wesentlichen unbeeinflusstes Durchlaufen des Befestigungsbandes durch die Durchführung zulässt.

Dabei kann es vorteilhaft sein, wenn das Sicherungselement und der Grundkörper derart zusammenwirken, dass das Sicherungselement zum einen nicht oder zumindest nicht ohne weiteres vollständig von dem Grundkörper gelöst werden kann und zum anderen in der Freigabestellung und/oder der Sicherungsstellung gegen ein versehentliches Versetzen in die jeweils andere Stellung gesichert ist. Daher ist es bevorzugt, wenn an dem Grundkörper und an dem Sicherungselement jeweilige Rastmittel vorgesehen sind, um das Sicherungselement in der Sicherungsstellung zu verrasten. Alternativ oder zusätzlich ist es ferner bevorzugt, wenn an dem Grundkörper und an dem Sicherungselement jeweilige Sicherungsmittel vorgesehen sind, um das Sicherungselement gegen ein unbeabsichtigtes Lösen von dem Grundkörper zu sichern. Beispielsweise kann an dem Sicherungselement, insbesondere an einen stegabschnittfreien Endbereich des Sicherungselements, eine Rastzunge ausgebildet sein, die beispielsweise mit einem oder mehreren an geeigneten Stellen in der Aufnahmeöffnung ausgebildeten Rastvorsprüngen zusammenwirken kann, oder umgekehrt. Die genannten Sicherungsmittel können beispielsweise ein Anschlagelement an dem Sicherungselement und eine Gegenanschlagelement an dem Grundkörper aufweisen, oder umgekehrt.

Die Erfindung wird nachfolgend lediglich beispielhaft unter Bezugnahme auf die Figuren näher erläutert.
- Fig. 1a bis 1c: zeigen eine Ausführungsform einer erfindungsgemäßen Halterung in verschiedenen Ansichten.
- Fig. 2a und 2b: zeigen das Befestigungsband dieser Ausführungsform in zwei Ansichten.
- Fig. 3a und 3b: zeigen jeweilige Sicherungselemente zweier Ausführungsformen der Halterung.
- Fig. 4a und 4b: zeigen Schnittdarstellungen der in Fig. 1 gezeigten Ausführungsform.
- Fig. 5a und 5b: zeigen Schnittdarstellungen einer weiteren Ausführungsform.
- Fig. 6a bis 6c: zeigen verschiedene Ausführungsformen der Ausbildung des Sicherungselements und des Befestigungsbandes in schematischen Schnittdarstellungen.
- Fig. 7: zeigt den Grundkörper einer Ausführungsform der Halterung in einer perspektivischen Darstellung von unten.

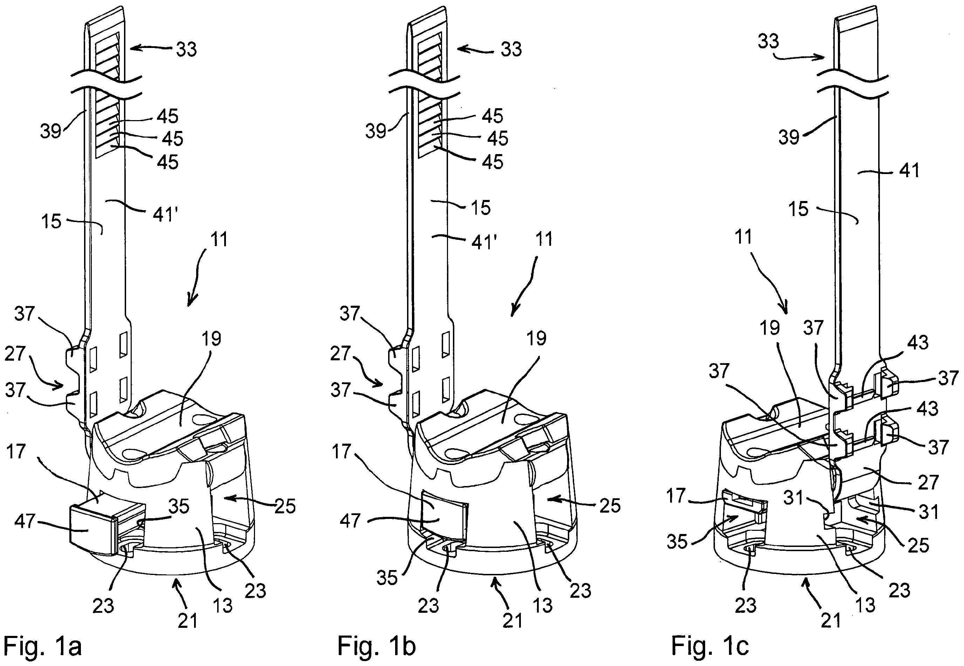

Eine beispielhafte Ausführungsform einer erfindungsgemäßen Halterung 11 für ein Zweirad-Zubehör wie beispielsweise ein Zweirad-Schloss ist in den Fig. 1a bis 1c in perspektivischer Darstellung gezeigt. Die Halterung 11 weist dabei einen Grundkörper 13, ein daran angeordnetes Befestigungsband 15 sowie ein Sicherungselement 17 auf. Die Fig. 1a und 1b unterscheiden sich lediglich darin, dass sich das Sicherungselement 17 einmal in einer Freigabestellung, d.h. in einer ein Durchführen des Befestigungsbandes durch die Durchführung freigebenden (und hier am Grundkörper 13 befindlichen) Stellung (Fig. 1a) und einmal in seiner Sicherungsstellung (Fig. 1b) befindet. Die Fig. 1c entspricht der Fig. 1b, zeigt die Halterung 11 aber aus einer anderen Blickrichtung.

Der Grundkörper 13 ist im Wesentlichen zylinderförmig, genauer im Wesentlichen kegelstumpfförmig, ausgebildet und weist an einer in den Figuren oben dargestellten Stirnseite einen konkav ausgebildeten Stützabschnitt 19 auf, mit dem der Grundkörper 13 an einen Rohrabschnitt eines (nicht dargestellten) Zweirads angelegt und hieran abgestützt werden kann. Die gegenüberliegende flach ausgebildete Stirnseite des Grundkörpers 13 bildet eine Halteeinrichtung 21, die vier Bohrungen 23 aufweist, um darüber ein (nicht dargestelltes) jeweiliges zubehör-spezifisches Adapterstück anordnen bzw. befestigen zu können, an dem das jeweilige Zubehör gelagert werden kann. Die Bohrungen 23 sind rotationssymmetrisch zu einer Zylinder- bzw. Kegelstumpfachse des Grundkörpers 13 regelmäßig verteilt angeordnet und weisen einen Winkelabstand von 90° zueinander auf. Dadurch kann ein geeignetes Adapterstück in vier verschiedenen Drehstellungen bezüglich der Zylinder- bzw. Kegelstumpfachse an der genannten Stirnseite 21 des Grundkörpers 13 befestigt werden, wodurch die Halterung 11 besonders flexibel einsetzbar ist.

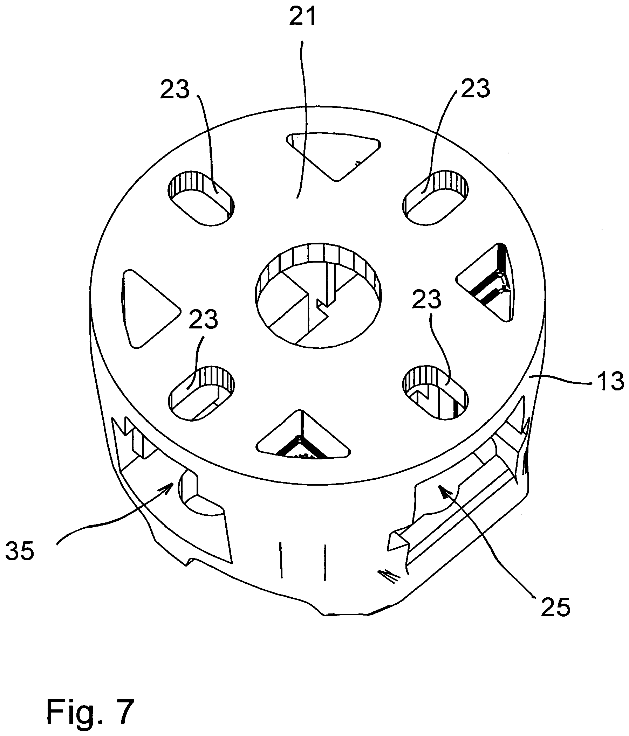

In Fig. 7 ist der Grundkörper 13 einer ähnlichen Ausführungsform der Halterung 11 aus einer Blickrichtung gezeigt, in der die genannte Stirnseite 21 deutlich zu sehen ist. Auch bei dieser Ausführungsform sind die Bohrungen 23 in der beschriebenen Weise angeordnet und ermöglichen so eine Befestigung eines Adapterstücks in zumindest vier verschiedenen Winkelstellungen relativ zu einer senkrecht durch den Mittelpunkt der Stirnseite 21 verlaufenden Zylinder- bzw. Kegelstumpfachse.

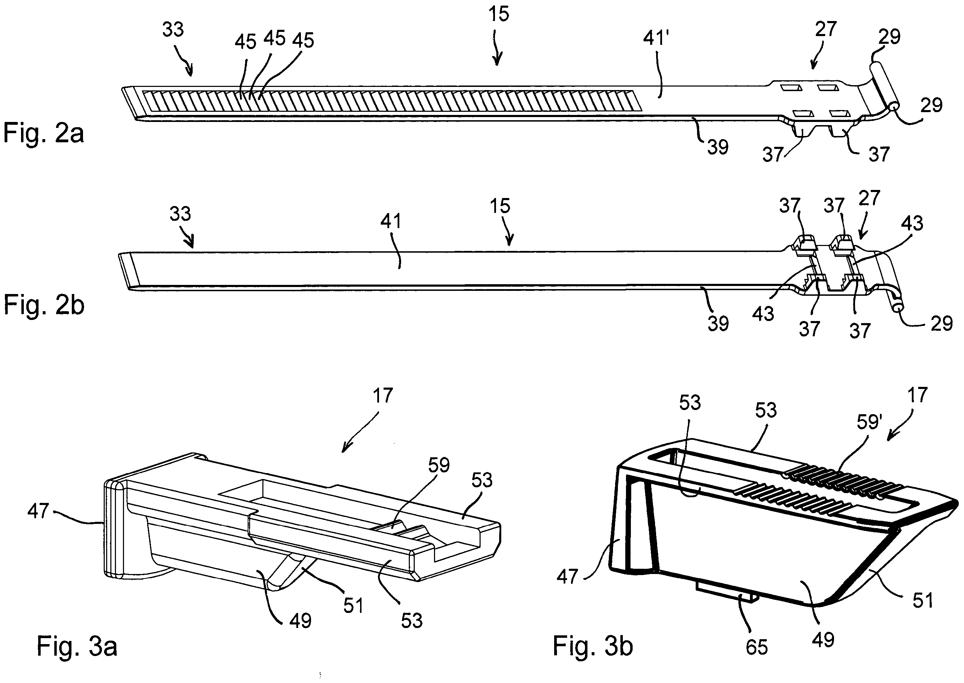

Wie ferner aus den Fig. 1a bis 1c zu erkennen ist, erstreckt sich senkrecht zu der Zylinder- bzw. Kegelstumpfachse des Grundkörpers 13 eine Durchführung 25 durch den Grundkörper 13. An deren ausgangsseitigem Ende (vgl. Fig. 1c) ist das erste Ende 27 des als länglicher flächiger Riemen ausgebildeten Befestigungsbandes 15 schwenkbar eingehängt. Wie in den Fig. 2a und 2b zu erkennen ist, weist das Befestigungsband 15 dazu an seinem ersten Ende 27 zwei seitliche Zapfenabschnitte 29 auf, die in Einhängenuten 31 (vgl. Fig. 1c) eingesetzt sind. Auf diese Weise ist das Befestigungsband 15 schwenkbar und stabil mit dem Grundkörper 13 verbunden, kann aber durch Herausführen der Zapfenabschnitte 29 aus den Einhängenuten 31 von dem Grundkörper 13 wieder gelöst werden, beispielsweise um das Befestigungsband 15 nach einer Beschädigung oder nach Verschleiß oder zur Anpassung an einen anderen Rohrabschnitt gegen ein anderes Befestigungsband 15 austauschen zu können.

Das dem ersten Ende 27 bezüglich der Längserstreckung des Befestigungsbandes 15 entgegengesetzte zweite Ende 33 des Befestigungsbandes 15 ist zunächst, das heißt vor einer Anordnung der Halterung 11 an einen Rohrabschnitt eines Zweirads lose und kann eingangsseitig (vgl. Fig. 1a und 1b) in die Durchführung 25 und durch die Durchführung 25 hindurchgeführt werden, so dass es zumindest teilweise ausgangsseitig wieder aus der Durchführung 25 heraustritt. Auf diese Weise kann das Befestigungsband 15 eine Schlaufe zur Umschlingung des Rohrabschnitts eines Zweirads bilden. Dabei liegt die Halterung 11 dann mit dem Stützabschnitt 19 sowie einem Teil des die Schlaufe bildenden Befestigungsbandes 15 an dem Rohrabschnitt an.

Ebenfalls senkrecht zu der genannten Zylinder- bzw. Kegelstumpfachse sowie senkrecht zur Erstreckung der Durchführung 25 ist in dem Grundkörper 13 eine axial durchgehende Aufnahmeöffnung 35 ausgebildet, in der das Sicherungselement 17 zwischen der Freigabestellung (Fig. 1a) und der Sicherungsstellung (Fig. 1b) beweglich gelagert ist. Während das Sicherungselement 17 in der Sicherungsstellung das Befestigungsband 15 in der Durchführung 25 durch Umlenkung spannt und gegen ein Versetzen sperrt, kann, wenn sich das Sicherungselement 17 in der Freigabestellung befindet, das Befestigungsband 15 ungehindert durch die Durchführung 25 durchgeführt werden, um auf diese Weise die von dem Befestigungsband 15 gebildete Schlaufe derart an einen Umfang des jeweiligen Rohrabschnitts anzupassen, dass der Stützabschnitt 19 und das Befestigungsband 15 eng an dem Rohrabschnitt anliegen.

Nachdem diese Einstellung vorgenommen wurde, also nachdem die gebildete Schlaufe durch Ziehen an dem aus der Durchführung 25 heraustretenden zweiten Ende 33 des Befestigungsbandes 15 in ihrer Länge minimiert wurde, kann dieser aus der Durchführung 25 heraustretende Teil des zweiten Endes 33 an das erste Ende 27 des Befestigungsbandes 15 angelegt werden, so dass das erste und das zweite Ende 27, 33 zumindest teilweise miteinander überlappen. Um diese Überlappung zu sichern und auf einem konstanten Maß zu halten, sind an dem ersten Ende 27 Fixiermittel in Form von vier rückfedernden Haltenasen 37 vorgesehen, die paarweise dazu ausgebildet sind, entgegengesetzte Schmalseiten 39 des Befestigungsbandes 15, insbesondere des zweiten Endes 33 des Befestigungsbandes 15, zu umgreifen. Die Haltenasen 37 sind dabei durch eine entsprechende Abschrägung so ausgebildet, dass das zweite Ende 33 des Befestigungsbandes 15 an den Haltenasen 37 vorbei gegen das erste Ende 27 des Befestigungsbandes 15 zur Ausbildung der gegenseitigen Überlappung gedrückt werden kann, dann aber von den Haltenasen 37 gehalten und insbesondere daran gehindert wird, (zumindest in umgekehrte Richtung) von dem ersten Ende 27 wieder gelöst zu werden.

Grundsätzlich lassen die Haltenasen 37 zwar noch ein Gleiten des zweiten Endes 33 an dem ersten Ende 27 in Richtung ihrer jeweiligen Längserstreckung zu. Zur Festlegung des Maßes der Überlappung sind aber als weitere Fixiermittel an einer Flachseite 41 des Befestigungsbandes 15 am ersten Endes 27 jeweils zwischen einem Paar von Haltenasen 37 Fixierzähne in Form von Rastzähnen 43 ausgebildet, die mit an der entgegengesezten Flachseite 41' am zweiten Ende 33 des Befestigungsbandes 15 ausgebildeten Fixierkerben in Form Rastkerben 45 zusammenwirken. Dabei greift ein jeweiliger Rastzahn 43 je nach Längsposition des das erste Ende 27 überlappenden zweiten Endes 33 des Befestigungsbandes 15 in eine jeweilige der Vielzahl von an dem zweiten Ende 33 ausgebildeten Rastkerben 45 ein und verhindert so, dass das zweite Ende 33 gegenüber dem ersten Ende 27 in eine Richtung gleiten kann, durch die die von dem Befestigungsband 15 gebildete Schlaufe verlängert würde. Aufgrund der Ausbildung der Fixierzähne und Fixierkerben als Rastzähne 43 und Rastkerben 45 ist hingegen ein entgegengesetztes Gleiten des zweiten Endes 33 an dem ersten Ende 27 zur Verkürzung der von dem Befestigungsband 15 gebildeten Schlaufe möglich. Die genannten Fixiermittel (Haltenasen 37, Rastzähne 43, Rastkerben 45) bilden somit eine Verschlusseinrichtung zum Festlegen der Länge einer durch das Befestigungsband 15 gebildeten Schlaufe.

Nachdem durch Sichern und Festlegen der Überlappung des ersten und zweiten Endes 27, 33 des Befestigungsbandes 15 die Halterung 11 bereits mit gewisser Stabilität an einem jeweiligen Rohrabschnitt eines Zweirads angeordnet sein kann, kann durch Versetzen des Sicherungselements 17 in die Sicherungsstellung die Stabilität und vor allem die Zuverlässigkeit dieser Befestigung weiter erhöht werden. Um ein besonders einfaches Versetzen des Sicherungselements 17 zu ermöglichen, weist es an einem Ende seiner Längserstreckung einen flächigen und senkrecht zur dieser Längserstreckung ausgebildeten Betätigungsabschnitt 47 auf, mittels dessen das Sicherungselement 17 auf einfache Weise durch Druck mit einem Finger in Richtung seiner Längserstreckung in die Sicherungsstellung überführt werden kann.

Wie insbesondere in den Fig. 3a und 3b zu erkennen ist, weist das Sicherungselement 17 ausgehend von dem Betätigungsabschnitt 47 einen senkrecht zur Längserstreckung des Sicherungselements 17 vorstehenden Stegabschnitt 49 auf, der in einer schrägen Flanke 51 mündet. Bei der in Fig. 3a gezeigten Ausführungsform erstreckt sich der Stegabschnitt 49 etwa über die Hälfte oder zwei Drittel der Länge des Sicherungselements 17. Bei der in Fig. 3b gezeigten Ausführungsform erstreckt sich der Stegabschnitt 49 im Wesentlichen über die gesamte Längserstreckung des Sicherungselements 17. Von dem Betätigungsabschnitt 47 und dem Stegabschnitt 49 abgesehen ist das Sicherungselement 17 im Wesentlichen flächig ausgebildet, wobei an Seitenkanten Führungsabschnitte 53 ausgebildet sind, die in entsprechende Führungsnuten (nicht dargestellt) in der Aufnahmeöffnung 35 des Grundkörpers 13 eingreifen, damit das Sicherungselement 17 dadurch bei Bewegungen in seine Sicherungsstellung oder aus seiner Sicherungsstellung geführt wird.

Die Aufnahmeöffnung 35 schneidet die Durchführung 25, wobei in der ein Durchführen des Befestigungsbandes durch die Durchführung freigebenden Stellung (vgl. Fig. 1a) des Sicherungselements 17 lediglich der stegabschnittfreie Teil des Sicherungselements 17 in die Durchführung 25 hineinragt. Daher kann in der dieser Stellung des Sicherungselements 17 das Befestigungsband 15 unter dem stegabschnittfreien Teil des Sicherungselements 17 hindurch und somit im Wesentlichen ungehindert auf direktem Weg durch die Durchführung 25 hindurchgeführt werden. Wenn anschließend das Sicherungselement 17 in seine Sicherungsstellung versetzt wird, wird der Stegabschnitt 49 mit Hilfe der schrägen Flanke 51 nach Art eines Keils gegen das Befestigungsband 15 gedrängt, so dass der Stegabschnitt 49 das Befestigungsband 15 zu einem Verlauf umlenkt, bei dem das Befestigungsband 15 um den Stegabschnitt 49 herumgeführt ist.

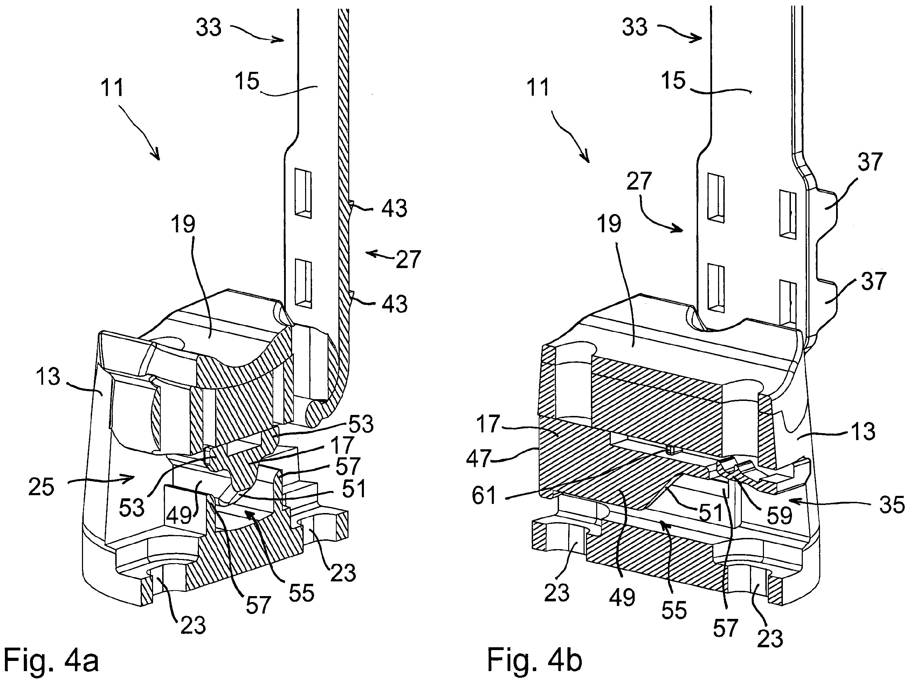

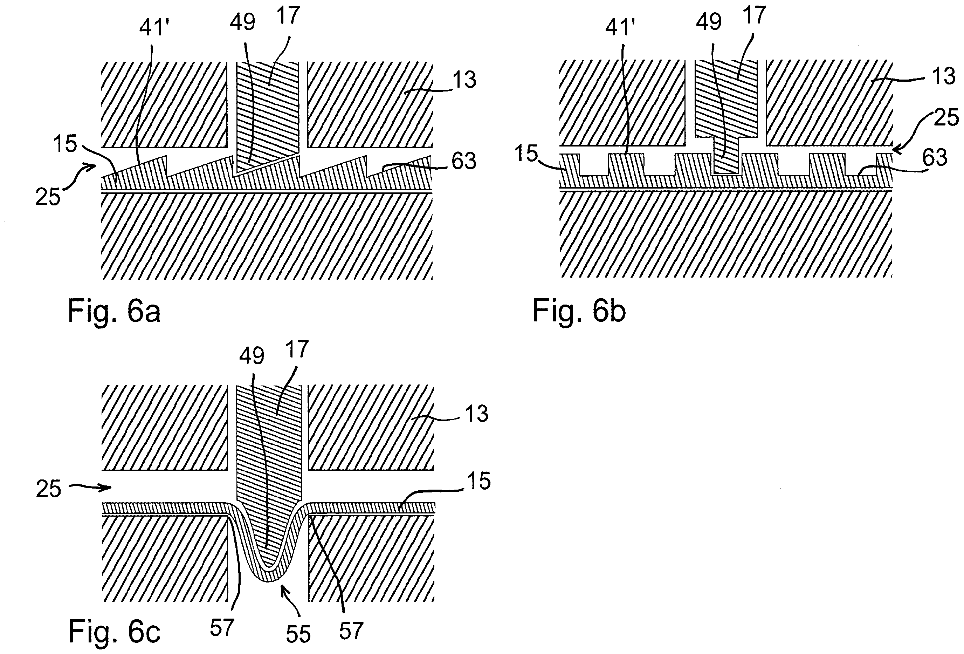

Die Sicherungsstellung des Sicherungselements 17 ist auch in den Schnittdarstellungen der Fig. 4a und 4b gezeigt. Insbesondere in Fig. 4a ist zu erkennen, wie das Sicherungselement 17 mit seinem Stegabschnitt 49 in die Durchführung 25 hineinragt und einen geradlinigen Verlauf des Befestigungsbandes 15 vom eingangsseitigen Ende der Durchführung 25 (in der Figur links) zum ausgangsseitigen Ende der Durchführung 25 (in der Figur rechts) verhindert (vgl. auch die in Fig. 6c dargestellte Schemazeichnung). Des Weiteren ist zu erkennen, dass die Durchführung 25 einen Umlenkraum 55 aufweist, der eingangsseitig und ausgangsseitig durch eine jeweilige Umlenkkante 57 begrenzt wird.

Während die Durchführung 25 im Bereich der Umlenkkanten 57 einen Querschnitt aufweist, der in senkrechter Richtung zu dem Verlauf der Durchführung 25 sowie zu dem Verlauf der Aufnahmeöffnung 35 nur geringfügig größer ist als die Dicke des Befestigungsbandes 15 (und im Wesentlichen wie ein Schlitz ausgebildet ist), ist der Querschnitt der Durchführung 25 im Bereich des Umlenkraums 55 wesentlich vergrößert. Dies dient zum einen dazu, dass der Stegabschnitt 49 in der Sicherungsstellung des Sicherungselements 17 in dem Umlenkraum 55 aufgenommen werden kann. Zum anderen wird das Befestigungsband 15 durch den Stegabschnitt 49 gerade in diesen Umlenkraum 55 umgelenkt. Dies ist schematisch in Fig. 6c dargestellt. Durch die Umlenkkanten 57 einerseits und den Stegabschnitt 49 andererseits wird in der Sicherungsstellung des Sicherungselements 17 das Befestigungsband 15 daher dreifach umgebogen, nämlich an der eingangsseitigen Umlenkkante 57 in den Umlenkraum 55 hinein, dann um die Stegabschnitt 49 des Sicherungselements 17 herum und schließlich bei Verlassen des Umlenkraums 55 an der ausgangsseitigen Umlenkkante 57 wieder zurück auf den weiteren, dann ungehinderten Verlauf durch die Durchführung 25 hindurch. Das Umlenken hat dabei den doppelten Effekt, zum einen aufgrund von Reibung an den Umlenkstellen 49, 57 ein Versetzen des Befestigungsbandes 15 in der Durchführung 25 zu verhindern und das Befestigungsband 15 somit in seiner Position zu sperren. Zum anderen wird durch das Umlenken die Wegstrecke verlängert, die das Befestigungsband 15 für seinen Verlauf durch die Durchführung 25 benötigt. Da das Befestigungsband 15 aber bereits eng um einen jeweiligen Rohrabschnitt eines Zweirades gelegt ist, wird durch diese Verlängerung der Wegstrecke ein noch engeres und mit Zug- bzw. Spannkraft auf den Rohrabschnitt wirkendes Anliegen des Befestigungsbandes 15 bewirkt.

Dabei weist das Befestigungsband 15 eine gewisse Elastizität mit hoher Federkonstante auf, so dass ein Teil der genannten Verlängerung der Wegstrecke durch die Elastizität kompensiert werden kann, was jedoch vorteilhafterweise zu einer zusätzlichen elastischen Spannkraft auf den Rohrabschnitt führt. Hierdurch wird eine besonders straffe und feste Befestigung der Halterung 11 an den jeweiligen Rohrabschnitt eines Zweirades erreicht.

Wie insbesondere in den Fig. 3a und 4b zu erkennen ist, weist das Sicherungselement 17 optional eine Rastzunge 59 auf, die dazu ausgebildet ist, mit Rastvorsprüngen 61, die in der Aufnahmeöffnung 35 ausgebildet sind und von denen lediglich einer in Fig. 4b zu erkennen ist, zusammenzuwirken, um jedenfalls ein versehentliches vollständiges Lösen des Sicherungselements 17 von dem Grundkörper 13 zu verhindern, so dass das Sicherungselement 17 nicht verloren gehen kann. Eine weitere Zusammenwirken der Rastzunge 59 mit einem Rastvorsprung 61 kann vorgesehen sein, um das Sicherungselement 17 in einer jeweiligen Stellung, insbesondere in der Sicherungsstellung verstärkt zu halten, beispielsweise damit das Sicherungselement 17 nicht aufgrund der Spannung des Befestigungsbandes 15 aus der Sicherungsstellung in eine freigebende Stellung herausgedrängt werden kann.

Alternativ zu der Rastzunge 59 können, wie bei der Ausführungsform der Fig. 3b, an dem Sicherungselement 17 auch andersartige Rastmittel 59' vorgesehen sein, um beispielsweise mit den genannten Rastvorsprüngen 61 zusammenzuwirken. Diese Rastmittel 59' können wie in Fig. 3b dargestellt als eine Riffelung ausgebildet sein, um ein Einrasten des Sicherungselements 17 in verschiedenen Einführtiefen zu bewirken. Auf diese Weise können auch mehrere bezüglich der jeweiligen Einführtiefe des Sicherungselements 17 verschiedene Sicherungsstellungen definiert sein.

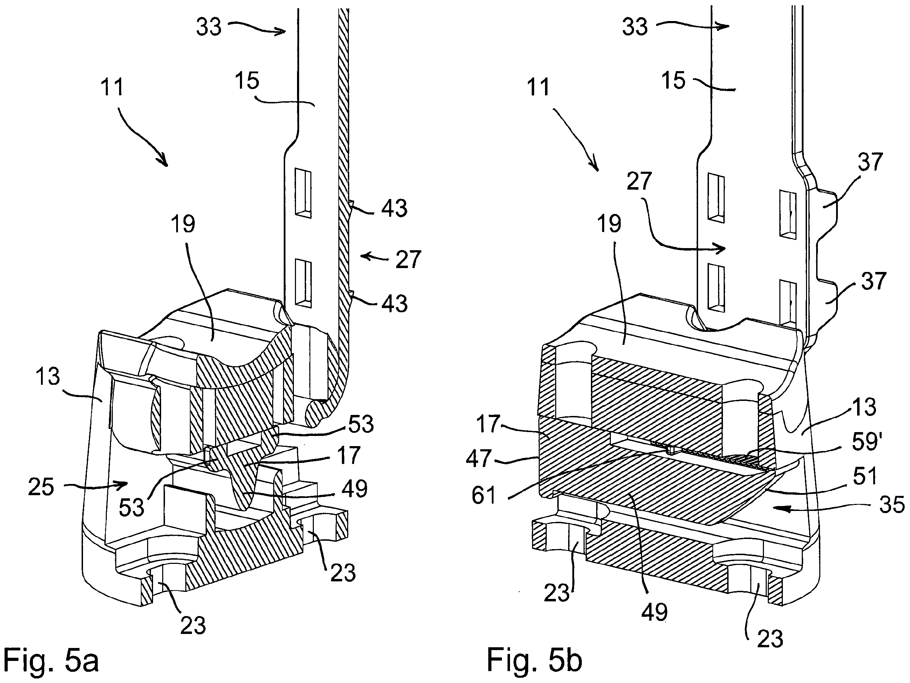

Die Fig. 5a und 5b entsprechen weitgehend den Fig. 4a und 4b. Die in den Fig. 5a und 5b gezeigte Ausführungsform unterscheidet sich von der in den Fig. 4a und 4b gezeigten im Wesentlichen lediglich dadurch, dass das Sicherungselement 17 und die Durchführung 25 anders ausgebildet sind. Die Durchführung 25 weist nämlich keinen Umlenkraum 55 und folglich auch keine den Umlenkraum 55 begrenzenden Umlenkkanten 57 auf, sondern hat einen im Wesentlichen durchgehend konstanten Querschnitt. Bei dieser Ausführungsform erfolgt ein Umlenken des Befestigungsbandes 15 lediglich durch den Stegabschnitt 49, der so ausgelegt ist, dass auch ohne zusätzliches Umlenken an Umlenkkanten 57 eine für eine stabile Festlegung des Befestigungsbandes 15 hinreichende Spannkraft erreicht wird. Insbesondere ist das Sicherungselement 17 bei dieser Ausführungsform ähnlich wie in Fig. 3b darstellt ausgebildet, weist also einen vergleichsweise langen Stegabschnitt 49 auf, dessen Flanke 51 unmittelbar an dem einen (dem Betätigungsabschnitt 47 entgegengesetzten) Ende der Längserstreckung des Sicherungselements 17 beginnt. Dadurch wird das durch die Durchführung 25 verlaufende Befestigungsband 15 früh stark umgelenkt, so dass eine sichere Festlegung des Befestigungsbandes 15 erfolgt.

Während bei den in den Fig. 1 bis 5 gezeigten Ausführungsformen das Sperren und Spannen des Befestigungsbandes 15 in der Durchführung 25 des Grundkörpers 13 im Wesentlichen kraftschlüssig erfolgt, ist zusätzlich oder alternativ auch ein formschlüssiges Sperren des Befestigungsbandes 15 gegen ein Versetzen in der Durchführung 25 möglich. Dies wird beispielhaft in den schematischen Darstellungen der Fig. 6a und 6b gezeigt. Darin ist zu erkennen, dass das Befestigungsband 15 an einer Flachseite 41' mehrere Eingriffsvertiefungen 63 aufweist, so dass das Sicherungselement 17 oder ein Stegabschnitt 49 des Sicherungselements 17 in eine jeweilige der Eingriffsvertiefungen 63 eingreifen kann, wenn sich der Stegabschnitt 49 in der Sicherungsstellung befindet. Durch dieses Eingreifen wird das Befestigungsband 15 dann gegen ein Versetzen in der Durchführung 25 zumindest in eine Richtung gehindert. Bei den Eingriffsvertiefungen 63 kann es sich um die Rastkerben 45 handeln. Die Eingriffsvertiefungen 63 und die Rastkerben 45 können aber auch, etwa in unterschiedlichen Bereichen des Befestigungsbandes 15, separat voneinander ausgebildet sein und verschiedene, ihrem jeweiligen Zweck angepasste Profile aufweisen.

Während bei der Ausführungsform gemäß Fig. 6a das Befestigungsband 15 gegen eine Bewegung in lediglich eine, nämlich vorzugsweise diejenige Richtung gesperrt ist, die zu einer Verlängerung der durch das Befestigungsband 15 gebildeten Schlaufe führen würde, bewirkt die Ausführung gemäß Fig. 6b eine vollständige Sperrung in beide Bewegungsrichtungen. Die gezeigten Profile der Eingriffsvertiefungen 63 des Befestigungsbandes 15 bzw. des Stegabschnitts 49 des Sicherungselements 17 sind lediglich beispielhaft und können grundsätzlich vielfältig andere Formen aufweisen, die ein formschlüssiges Sperren des Befestigungsbandes 15 ermöglichen. Insbesondere kann an dem Stegabschnitt 49 ein Eingriffsvorsprung 65 ausgebildet sein, um zusätzlich zu der allgemeinen Umlenkwirkung des Stegabschnitts 49 definiert in eine jeweilige Eingriffsvertiefung 63 eingreifen zu können. Ein solcher Eingriffsvorsprung 65 ist beispielhaft schematisch in Fig. 3b gezeigt. Der Eingriffsvorsprung 65 kann dabei insbesondere eine geringere Länge als der Stegabschnitt 49 aufweisen, die auf die Breite entsprechender an dem Befestigungsband 15 ausgebildeter Eingriffsvertiefungen 63 abgestimmt ist. Dadurch dass der Eingriffsvorsprung 65 nur in einem, insbesondere mittleren, Bereich der Längserstreckung des Stegabschnitts 49 ausgebildet ist, wird das Befestigungsband 15, während es durch das Sicherungselement 17 gespannt und/oder gesperrt wird, weniger belastet und ist daher weniger gefährdet, durch eine übermäßige Einwirkung des Stegabschnitts 49 beschädigt zu werden. Generell kann die Länge eines derartigen Eingriffsvorsprungs 65 etwa ein Drittel oder etwa die Hälfte oder etwa zwei Drittel der Länge des Sicherungselements 17 betragen.

Insbesondere ist auch eine Kombination des formschlüssigen Sperrens beispielsweise nach Fig. 6b und des kraftschlüssigen Sperrens und/oder Spannens beispielsweise nach Fig. 6c möglich, wobei dann der Stegabschnitt 49 in der Sicherungsstellung des Sicherungselements 17 sowohl in eine jeweilige Eingriffsvertiefung 63 des Befestigungsbandes 15 eingreift als auch das Befestigungsband 15 im Bereich dieser Eingriffsvertiefung 63 umlenkt und spannt.

Die beispielhaften Ausführungsformen zeigen, dass die erfindungsgemäße Halterung 11 für Zweirad-Zubehör in besonders einfacher Weise betätigbar und insbesondere werkzeuglos an einem jeweiligen Rohrabschnitt eines Zweirads in einer Weise befestigt werden kann, die zu einer besonderen Stabilität und Zuverlässigkeit der Anordnung führt.

### Bezugszeichenliste

- 11: Halterung
- 13: Grundkörper
- 15: Befestigungsband
- 17: Sicherungselement
- 19: Stützabschnitt
- 21: Halteeinrichtung
- 23: Bohrung
- 25: Durchführung
- 27: erstes Ende
- 29: Zapfenabschnitt
- 31: Einhängenut
- 33: zweites Ende
- 35: Aufnahmeöffnung
- 37: Haltenase
- 39: Schmalseite
- 41, 41': Flachseite
- 43: Rastzahn
- 45: Rastkerbe
- 47: Betätigungsabschnitt
- 49: Stegabschnitt
- 51: Flanke
- 53: Führungsabschnitt
- 55: Umlenkraum
- 57: Umlenkkante
- 59, 59': Rastzunge, Rastmittel
- 61: Rastvorsprung
- 63: Eingriffsvertiefung
- 65: Eingriffsvorsprung

## Patentansprüche

1. Halterung (11) für ein Zweirad-Zubehör, insbesondere für ein Zweirad-Schloss, mit:
einem Befestigungsband (15) zum Umschlingen eines Rohrabschnitts eines Zweirads, wobei das Befestigungsband (15) ein erstes und ein zweites, loses Ende (27, 33) aufweist;
einem Sicherungselement (17);
und einem Grundkörper (13), der einen Stützabschnitt (19) zum Anliegen an dem Rohrabschnitt des Zweirads, eine Halteeinrichtung (21) für das Zweirad-Zubehör oder für ein zubehör-spezifisches Adapterstück, eine Durchführung (25) für zumindest das zweite Ende (33) des Befestigungsbandes (15) sowie eine quer zur Durchführung (25) ausgerichtete Aufnahmeöffnung (35) für das Sicherungselement (17) aufweist;
wobei das Befestigungsband (15), wenn es durch die Durchführung (25) durchgeführt ist, entlang der Durchführung (25) versetzbar ist, und
wobei das Sicherungselement (17) vom Benutzer aus einer grundsätzlich das Hindurchführen zumindest eines Teils des Befestigungsbandes freigebenden Stellung in eine Sicherungsstellung linear versetzbar ist, in der sich das Sicherungselement (17) zumindest teilweise in der Aufnahmeöffnung (35) befindet und das Befestigungsband (15) in der Durchführung (25) durch Umlenkung spannt und/oder gegen ein Versetzen sperrt, **gekennzeichnet dadurch, dass** das Sicherungselement (17) werkzeuglos in die Sicherungsstellung linear versetzbar ist.

2. Halterung nach Anspruch 1,
wobei das erste Ende (27) des Befestigungsbandes (15) an dem Grundkörper (13) befestigt ist.

3. Halterung nach Anspruch 2,
wobei das erste Ende (27) des Befestigungsbandes (15) schwenkbar an dem Grundkörper (13) befestigt ist;
und/oder
wobei das erste Ende (27) des Befestigungsbandes (15) an dem Grundkörper (13) eingehängt ist, wobei das erste Ende (27) des Befestigungsbandes (15) vorzugsweise zwei seitliche Zapfenabschnitte (29) aufweist, mittels derer das Befestigungsband (15) in einer zugeordneten Aufnahmevertiefung (31) an dem Grundkörper (13) eingehängt ist.

4. Halterung nach zumindest einem der vorstehenden Ansprüche,
wobei das Befestigungsband (15) elastisch ist, um durch ein Spannen des Befestigungsbands (15) bei und/oder nach dem Umschlingen des Rohrabschnitts des Zweirads eine dauerhafte Zugkraft zwischen dem ersten Ende (27) und dem zweiten Ende (33) zu erzeugen.

5. Halterung nach zumindest einem der vorstehenden Ansprüche,
wobei an dem Befestigungsband (15) außerhalb des Grundkörpers (13) eine Verschlusseinrichtung (37, 43, 45) zum Festlegen der Länge einer durch das Befestigungsband (15) gebildeten Schlaufe ausgebildet ist.

6. Halterung nach Anspruch 5,
wobei dem ersten Ende (27) des Befestigungsbandes (15) und dem zweiten Ende (33) des Befestigungsbandes (15) jeweilige Fixiermittel (37, 43, 45) zugeordnet sind, um eine Überlappung des durch die Durchführung (25) geführten zweiten Endes (33) des Befestigungsbandes (15) mit dem ersten Ende (27) des Befestigungsbandes (15) festzulegen.

7. Halterung nach Anspruch 6,
wobei die dem ersten Ende (27) des Befestigungsbandes (15) zugeordneten Fixiermittel mehrere Haltenasen (37) aufweisen, um das zweite Ende (33) des Befestigungsbandes (15) im Bereich der Haltenasen (37) an dem Befestigungsband (15) anliegend zu halten, oder umgekehrt;
wobei vorzugsweise die Haltenasen (37) paarweise dazu ausgebildet sind, jeweils entgegengesetzte Schmalseiten (39) des Befestigungsbandes (15) zu umgreifen.

8. Halterung nach Anspruch 6 oder 7,
wobei die dem ersten Ende (27) des Befestigungsbandes (15) zugeordneten Fixiermittel zumindest einen Fixierzahn (43) und die dem zweiten Ende (33) des Befestigungsbandes (15) zugeordneten Fixiermittel eine Vielzahl von Fixierkerben (45) aufweisen, oder umgekehrt, um durch das Eingreifen des zumindest einen Fixierzahns (43) in eine jeweilige Fixierkerbe (45) das Maß der Überlappung festzulegen;
wobei der zumindest eine Fixierzahn (43) vorzugsweise an einer Flachseite (41) des Befestigungsbandes (15) vorgesehen ist und die Vielzahl von Fixierkerben (45) an einer entgegengesetzten Flachseite (41') des Befestigungsbandes (15) vorgesehen ist.

9. Halterung nach zumindest einem der vorstehenden Ansprüche,
wobei das Sicherungselement (17) dazu angepasst ist, durch eine Bewegung in die Sicherungsstellung das in der Durchführung (25) befindliche Befestigungsband (15) von dem Stützabschnitt (19) des Grundkörpers (13) weg zu bewegen, um das Befestigungsband (15) zu spannen; und/oder
wobei die Durchführung (25) einen Umlenkraum (55) aufweist, der bezüglich der Durchführrichtung des Befestigungsbandes (15) zu beiden Seiten von einer jeweiligen Umlenkkante (57) begrenzt ist, wobei der Bereich des Umlenkraums (55) gegenüber den Bereichen der Umlenkkanten (57) eine Querschnittsvergrößerung aufweist.

10. Halterung nach zumindest einem der vorstehenden Ansprüche,
wobei die Halterung (11) derart ausgebildet ist,
dass das zweite Ende (33) des Befestigungsbandes (15) gemäß einem direkten Verlauf durch die Durchführung (25) geführt werden kann, und dass, wenn das zweite Ende (33) des Befestigungsbandes (15) gemäß dem direkten Verlauf durch die Durchführung (25) geführt ist und das Sicherungselement (17) in die Sicherungsstellung bewegt wird, das Befestigungsband (15) von dem Sicherungselement (17) zu einem umgelenkten Verlauf, der länger als der direkte Verlauf ist, umgelenkt wird, um das Befestigungsband (15) zu spannen.

11. Halterung nach zumindest einem der vorstehenden Ansprüche,
wobei das Befestigungsband (15) an einer Flachseite (41') mehrere Eingriffsvertiefungen (63) aufweist, wobei das Sicherungselement (17) in der Sicherungsstellung in wenigstens eine der Eingriffsvertiefungen (63) eingreift.

12. Halterung nach zumindest einem der vorstehenden Ansprüche,
wobei das Sicherungselement (17) einen Stegabschnitt (49) aufweist, der in Richtung der Beweglichkeit des Sicherungselements (17) in der Aufnahmeöffnung (35) verläuft und der senkrecht zu dieser Richtung vorsteht, und wobei der Stegabschnitt (49) dazu ausgebildet ist, in der Sicherungsstellung des Sicherungselements (17) das Befestigungsband (15) umzulenken und/oder in das Befestigungsband (15) einzugreifen.

13. Halterung nach Anspruch 12,
wobei der Stegabschnitt (49) in Richtung zur Sicherungsstellung hin eine schräge Flanke (51) aufweist, um bei Bewegen des Sicherungselements (17) in die Sicherungsstellung das Befestigungsband (15) zunehmend umzulenken;
und/oder
wobei sich der Stegabschnitt (49) von einem in Richtung von der Sicherungsstellung weg ausgerichteten Ende des Sicherungselements (17) aus über einen Teil der Länge des Sicherungselements (17) in Richtung eines zur Sicherungsstellung hin ausgerichteten Endes des Sicherungselements (17) erstreckt.

14. Halterung nach zumindest einem der vorstehenden Ansprüche,
wobei an dem Grundkörper (13) und an dem Sicherungselement (17) jeweilige Rastmittel (59, 59', 61) vorgesehen sind, um das Sicherungselement (17) in der Sicherungsstellung zu verrasten;
und/oder
wobei an dem Grundkörper (13) und an dem Sicherungselement (17) jeweilige Sicherungsmittel (59, 59', 61) vorgesehen sind, um das Sicherungselement (17) gegen ein unbeabsichtigtes Lösen von dem Grundkörper (13) zu sichern.

15. Halterung nach zumindest einem der vorstehenden Ansprüche,
wobei die Aufnahmeöffnung (35) an dem Grundkörper (13) durchgehend und derart ausgebildet ist, dass das Sicherungselement (17) von beiden Enden der Aufnahmeöffnung (35) in diese einführbar ist;
und/oder
wobei die Durchführung (25) und die Aufnahmeöffnung (35) des Grundkörpers (13) derart gleichartig zueinander ausgebildet sind, dass das Befestigungsband (15) wahlweise durch die Aufnahmeöffnung (35) führbar ist und das Sicherungselement (17) wahlweise in der Durchführung (25) in eine Sicherungsstellung beweglich ist, in der das Sicherungselement (17) das Befestigungsband (15) in der Aufnahmeöffnung (35) durch Umlenkung spannt und/oder gegen ein Versetzen sperrt.

## Claims

1. A holder (11) for a two-wheeler accessory, in particular for a two-wheeler lock, comprising:
a fastening band (15) for wrapping around a tube section of a two-wheeler, wherein the fastening band (15) has a first end and a second, loose end (27, 33);
a securing element (17);
and a base body (13) which has a support section (19) for contacting the tube section of the two-wheeler, a holding device (21) for the two-wheeler accessory or for an accessory-specific adapter piece, a leadthrough (25) for at least the second end (33) of the fastening band (15) and a reception opening (35) for the securing element (17) aligned transversely to the leadthrough (25),
wherein the fastening band (15) is displaceable along the leadthrough (25) when it is led through the leadthrough (25); and
wherein the securing element (17) can be linearly displaced by the user from a position generally releasing the leading through of at least a part of the fastening band into a securing position in which the securing element (17) is at least partly located in the reception opening (35) and tensions the fastening band (15) in the leadthrough (25) by deflection and/or blocks it against a displacement, **characterized in that** the securing element (17) is linearly displaceable into the securing position without tools.

2. A holder in accordance with claim 1,
wherein the first end (27) of the fastening band (15) is fastened to the base body (13).

3. A holder in accordance with claim 2,
wherein the first end (27) of the fastening band (15) is pivotably fastened to the base body (13);
and/or
wherein the first end (27) of the fastening band (15) is hung in at the base body (13), with the first end (27) of the fastening band (15) preferably having two lateral spigot sections (29) by means of which the fastening band (15) is hung in an associated reception recess (31) at the base body (13).

4. A holder in accordance with at least one of the preceding claims,
wherein the fastening band (15) is elastic to generate a permanent tensile force between the first end (27) and the second end (33) by a tensioning of the fastening band (15) during and/or after the wrapping around of the tube section of the two-wheeler.

5. A holder in accordance with at least one of the preceding claims,
wherein a closure device (37, 43, 45) is formed at the fastening band (15) outside the base body (13) for fixing the length of a loop formed by the fastening band (15).

6. A holder in accordance with claim 5,
wherein respective fixing means (37, 43, 45) are associated with the first end (27) of the fastening band (15) and with the second end (33) of the fastening band (15) to fix an overlap of the second end (33) of the fastening band (15) led through the leadthrough (25) with the first end (27) of the fastening band (15).

7. A holder in accordance with claim 6,
wherein the fixing means associated with the first end (27) of the fastening band (15) have a plurality of holding noses (37) to hold the second end (33) of the fastening band (15) contacting the fastening band (15) in the region of the holding noses (37), or vice versa;
wherein the holding noses (37) are preferably formed in pairs to engage around respective oppositely disposed narrow sides (39) of the fastening band (15).

8. A holder in accordance with claim 6 or claim 7,
wherein the fixing means associated with the first end (27) of the fastening band (15) have at least one fixing tooth (43) and the fixing means associated with the second end (33) of the fastening band (15) have a plurality of fixing notches (45), or vice versa, to fix the amount of overlap by the engagement of the at least one fixing tooth (43) into a respective fixing notch (45);
wherein the at least one fixing tooth (43) is preferably provided at a flat side (41) of the fastening band (15) and the plurality of fixing notches (45) are provided at an oppositely disposed flat side (41') of the fastening band (15).

9. A holder in accordance with at least one of the preceding claims,
wherein the securing element (17) is adapted to move the fastening band (15) located in the leadthrough (25) away from the support section (19) of the base body (13) by a movement into the securing position in order to tension the fastening band (15);
and/or
wherein the leadthrough (25) has a deflection space (55) which is bounded with respect to the leadthrough direction of the fastening band (15) at both sides by a respective deflection edge (57), with the region of the deflection space (55) having an enlargement of the cross-section with respect to the regions of the deflection edges (57).

10. A holder in accordance with at least one of the preceding claims,
wherein the holder (11) is configured such that
the second end (33) of the fastening band (15) can be guided through the leadthrough (25) in accordance with a direct course and, when the second end (33) of the fastening band (15) is guided through the leadthrough (25) in accordance with the direct course and the securing element (17) is moved into the securing position, the fastening band (15) is deflected by the securing element (17) to a deflected course, which is longer than the direct course, in order to tension the fastening band (15).

11. A holder in accordance with at least one of the preceding claims,
wherein the fastening band (15) has a plurality of engagement recesses (63) at a flat side (41'), with the securing element (17) engaging into at least one of the engagement recesses (63) in the securing position.

12. A holder in accordance with at least one of the preceding claims,
wherein the securing element (17) has a web section (49) which extends in the direction of the movability of the securing element (17) in the reception opening (35) and which projects perpendicular to this direction; and wherein the web section (49) is configured to deflect the fastening band (15) and/or to engage into the fastening band (15) in the securing position of the securing element (17).

13. A holder in accordance with claim 12,
wherein the web section (49) has a slanted flank (51) in the direction toward the securing position to deflect the fastening band (15) increasingly on a movement of the securing element (17) into the securing position; and/or
wherein the web section (49) extends from an end of the securing element (17) oriented in the direction away from the securing position over a part of the length of the securing element (17) in the direction of an end of the securing element (17) oriented toward the securing position.

14. A holder in accordance with at least one of the preceding claims,
wherein respective latching means (59, 59', 61) are provided at the base body (13) and at the securing element (17) to latch the securing element (17) in the securing position;
and/or
wherein respective securing means (59, 59', 61) are provided at the base body (13) and at the securing element (17) to secure the securing element (17) against an unintentional release from the base body (13).

15. A holder in accordance with at least one of the preceding claims,
wherein the reception opening (35) is formed continuously at the base body (13) and is formed such that the securing element (17) can be introduced into the reception opening (35) from both ends thereof;
and/or
wherein the leadthrough (25) and the reception opening (35) of the base body (13) are formed in a similar manner to one another such that the fastening band (15) can be selectively guided through the reception opening (35) and the securing element (17) is selectively movable in the leadthrough (25) into a securing position in which the securing element (17) tensions the fastening band (15) in the reception opening (35) by deflection and/or blocks it against a displacement.

## Revendications

1. Support (11) pour un accessoire de deux-roues, en particulier pour un cadenas de deux-roues, comprenant :
une bande de fixation (15) pour entourer une portion tubulaire d'un deux-roues, ladite bande de fixation (15) comprenant une première et une seconde extrémité libre (27, 33) ;
un élément de blocage (17) ; et
un corps de base (13) qui comprend une portion de soutien (19) destinée à être appliquée contre la portion tubulaire du deux-roues, un moyen de maintien (21) pour l'accessoire de deux-roues ou pour une pièce d'adaptation spécifique à l'accessoire, une traversée (25) pour au moins la seconde extrémité (33) de la bande de fixation (15) ainsi qu'une ouverture de réception (35), orientée transversalement à la traversée (25), pour l'élément de blocage (17) ;
dans lequel la bande de fixation (15), lorsqu'elle est passée à travers la traversée (25), est déplaçable le long de la traversée (25), et
dans lequel l'élément de blocage (17) est déplaçable de façon linéaire par l'utilisateur depuis une position qui libère fondamentalement la traversée d'au moins une partie de la bande de fixation, jusque dans une position de blocage dans laquelle l'élément de blocage (17) se trouve au moins partiellement dans l'ouverture de réception (35) et tend la bande de fixation (15) dans la traversée (25) par rabattement et/ou la bloque à l'encontre d'un déplacement,
**caractérisé en ce que** l'élément de blocage (17) est déplaçable de façon linéaire sans outillage jusque dans la position de blocage.

2. Support selon la revendication 1,
dans lequel la première extrémité (27) de la bande de fixation (15) est fixée sur le corps de base (13).

3. Support selon la revendication 2,
dans lequel la première extrémité (27) de la bande de fixation (15) est fixée de façon pivotante sur le corps de base (13) ; et/ou
dans lequel la première extrémité (27) de la bande de fixation (15) est accrochée sur le corps de base (13), ladite première extrémité (27) de la bande de fixation (15) comprenant de préférence deux portions latérales en forme de tenons (29), au moyen desquels la bande de fixation (15) est accrochée sur le corps de base (13) dans un renfoncement de réception associé (31).

4. Support selon l'une au moins des revendications précédentes,
dans lequel la bande de fixation (15) est élastique, afin d'engendrer, par une tension de la bande de fixation (15) lors du passage autour de la portion tubulaire du deux-roues ou après ce passage, une force de traction durable entre la première extrémité (27) et la seconde extrémité (33).

5. Support selon l'une au moins des revendications précédentes,
dans lequel un moyen de fermeture (37, 43, 45) pour établir fermement la longueur d'une boucle formée par la bande de fixation (15) est réalisé sur la bande de fixation (15) à l'extérieur du corps de base (13).

6. Support selon la revendication 5,
dans lequel des moyens de fixation respectifs (37, 43, 45) sont associés à la première extrémité (27) de la bande de fixation (15) et à la seconde extrémité (33) de la bande de fixation (15), afin de déterminer un chevauchement de la seconde extrémité (33), passée à travers la traversée (25), de la bande de fixation (15) avec la première extrémité (27) de la bande de fixation (15).

7. Support selon la revendication 6,
dans lequel les moyens de fixation associés à la première extrémité (27) de la bande de fixation (15) comprennent plusieurs doigts de maintien (37), afin de pouvoir maintenir la seconde extrémité (33) de la bande de fixation (15) dans la région des doigts de maintien (37) en s'appliquant contre la bande de fixation (15), ou inversement ;
dans lequel de préférence les doigts de maintien (37) sont réalisés par paires de manière à entourer les petits côtés mutuellement opposés (39) de la bande de fixation (15).

8. Support selon la revendication 6 ou 7,
dans lequel les moyens de fixation associés à la première extrémité (27) de la bande de fixation (15) comprennent au moins une dent de fixation (43), et les moyens de fixation associés à la seconde extrémité (33) de la bande de fixation (15) comprennent une pluralité d'encoches de fixation (45), ou inversement, afin de fixer l'étendue du chevauchement par engagement de ladite au moins une dent de fixation (43) dans une encoche de fixation respective (45) ;
dans lequel ladite au moins une dent de fixation (43) est prévue de préférence au niveau d'un côté plat (41) de la bande de fixation (15), et la pluralité d'encoches de fixation (45) sont prévues sur un côté plat opposé (41') de la bande de fixation (15).

9. Support selon l'une au moins des revendications précédentes,
dans lequel l'élément de blocage (17) est adapté afin de déplacer, par un mouvement jusque dans la position de blocage, la bande de fixation (15) qui se trouve dans la traversée (25) en éloignement de la portion de soutien (19) du corps de base (13), pour tendre la bande de fixation (15) ; et/ou dans lequel la traversée (25) comporte un espace de renvoi (55) qui est délimité, par référence à la direction de traversée de la bande de fixation (15), sur les deux côtés par une arête de renvoi respective (57), et la zone de l'espace de renvoi (55) présente, à l'opposé des zones des arêtes de renvoi (57), une augmentation de section transversale.

10. Support selon l'une au moins des revendications précédentes,
dans lequel le support (11) est réalisé de telle manière que la seconde extrémité (33) de la bande de fixation (15) peut être guidée suivant un tracé direct à travers la traversée (25), et
que, lorsque la seconde extrémité (33) de la bande de fixation (15) est guidée suivant le tracé direct à travers la traversée (25) et que l'élément de blocage (17) est déplacé jusque dans la position de blocage, la bande de fixation (15) est renvoyée vers un tracé avec renvoi qui est plus long que le tracé direct, afin de tendre la bande de fixation (15).

11. Support selon l'une au moins des revendications précédentes,
dans lequel la bande de fixation (15) comporte sur un côté plat (41') plusieurs renfoncements d'engagement (63), et l'élément de blocage (17) s'engage, dans la position de blocage, dans l'un au moins des renfoncements d'engagement (63).

12. Support selon l'une au moins des revendications précédentes,
dans lequel l'élément de blocage (17) comprend une portion en forme de barrette (49), qui s'étend dans la direction de mobilité de l'élément de blocage (17) dans l'ouverture de réception (35) et qui dépasse perpendiculairement à cette direction, et
dans lequel la portion en forme de barrette (49) est réalisée, dans la position de blocage de l'élément de blocage (17), afin de renvoyer la bande de fixation (15) et/ou de s'engager dans la bande de fixation (15).

13. Support selon la revendication 12,
dans lequel la portion en forme de barrette (49) présente, en direction de la position de blocage, un flanc oblique (51), afin de renvoyer progressivement la bande de fixation (15) lors du déplacement de l'élément de blocage (17) jusque dans la position de blocage ; et/ou dans lequel la portion en forme de barrette (49) s'étend, partant d'une extrémité de l'élément de blocage (17) orientée en éloignement de la position de blocage, sur une partie de la longueur de l'élément de blocage (17) en direction d'une extrémité de l'élément de blocage (17) orientée vers la position de blocage.

14. Support selon l'une au moins des revendications précédentes,
dans lequel des moyens d'enclenchement respectifs (59, 59', 61) sont prévus sur le corps de base (13) et sur l'élément de blocage (17), afin d'enclencher l'élément de blocage (17) dans la position de blocage ; et/ou dans lequel des moyens de blocage respectifs (59, 59', 61) sont prévus sur le corps de base (13) et sur l'élément de blocage (17), afin de bloquer l'élément de blocage (17) à l'encontre d'un détachement inopiné vis-à-vis du corps de base (17).

15. Support selon l'une au moins des revendications précédentes,
dans lequel l'ouverture de réception (35) est réalisée de façon traversante sur le corps de base (13) et de telle manière que l'élément de blocage (17) peut être introduit dans l'ouverture de réception (35) depuis les deux extrémités de celle-ci ; et/ou
la traversée (25) et l'ouverture de réception (35) du corps de base (13) sont réalisées de manière similaire l'une à l'autre de telle façon que la bande de fixation (15) peut être passée au choix à travers l'ouverture de réception (35) et que l'élément de blocage (17) et déplaçable au choix dans la traversée (25) jusque dans une position de blocage dans laquelle l'élément de blocage (17) tend la bande de fixation (15) dans l'ouverture de réception (35) par un renvoi et/ou la bloque à l'encontre d'un déplacement.
